# EUROPEAN PATENT APPLICATION

(11) **EP 4 797 853 A1**
(43) Date of publication of application: **26.08.2026**
(21) Application number: 24893323.6
(22) Date of filing: 14.11.2024
(51) Int. Cl.: H04W 72/542

(54) **METHOD FOR WAKING UP DEVICE AND COMMUNICATION APPARATUS**

(30) Priority: 23.11.2023 CN 202311580854
(71) Applicant: HUAWEI TECHNOLOGIES CO., LTD., Shenzhen 518129 (CN)
(72) Inventor: XIE, Xinqian, Shenzhen, Guangdong 518129 (CN); LU, Jianzhong, Shenzhen, Guangdong 518129 (CN)
(74) Representative: Isarpatent
(86) International application number: PCT/CN2024/132029
(87) International publication number: WO 2025/108165

(57) **Abstract**

Embodiments of this application relate to the field of communication technologies, and provide a communication method and apparatus, to resolve a problem that it is difficult to sense a target with a lower velocity because a velocity-dimensional sensing resolution is low when a communication signal and a sensing signal are multiplexed. In the method, a first network device sends first indication information to a terminal device, where the first indication information indicates information about a first time segment, a second time segment, and a third time segment, the first time segment and the second time segment respectively occupy a time segment in a first period, and the third time segment includes at least a part of each second time segment in a plurality of first periods. The first network device sends second indication information to the terminal device, where the second indication information indicates that a first signal occupies the first time segment or the second time segment. In this way, more resources can be scheduled at a time, a target with a higher sensing velocity can be sensed for the sensing signal, thereby improving a sensing capability.

## Description

This application claims priority to Chinese Patent Application No. 202311580854.7, filed with the China National Intellectual Property Administration on November 23, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a process of evolution from a 5th generation (5th generation, 5G) mobile communication system to a 5G-advanced (5G-advanced, 5G-A) technology, a communication and sensing technology is considered as one of key technologies that can extend a service capability of a mobile communication network. A core idea of the communication and sensing technology is adding a sensing capability to the mobile communication network and constructing capabilities such as detecting, tracking, and imaging a target, so that communication and sensing capabilities are integrated into one network, thereby achieving harmonious coexistence and mutual benefit. A principle of a sensing technology is as follows: A transmitting end device sends a radio wave (namely, a sensing signal) to a specific direction. After the radio wave irradiates a surface of the target, a reflected wave (namely, an echo signal of the sensing signal) is formed. In this way, a receiving end device receives and processes the reflected wave, to obtain sensing data, for example, information such as a location, a velocity, or a type of the target.

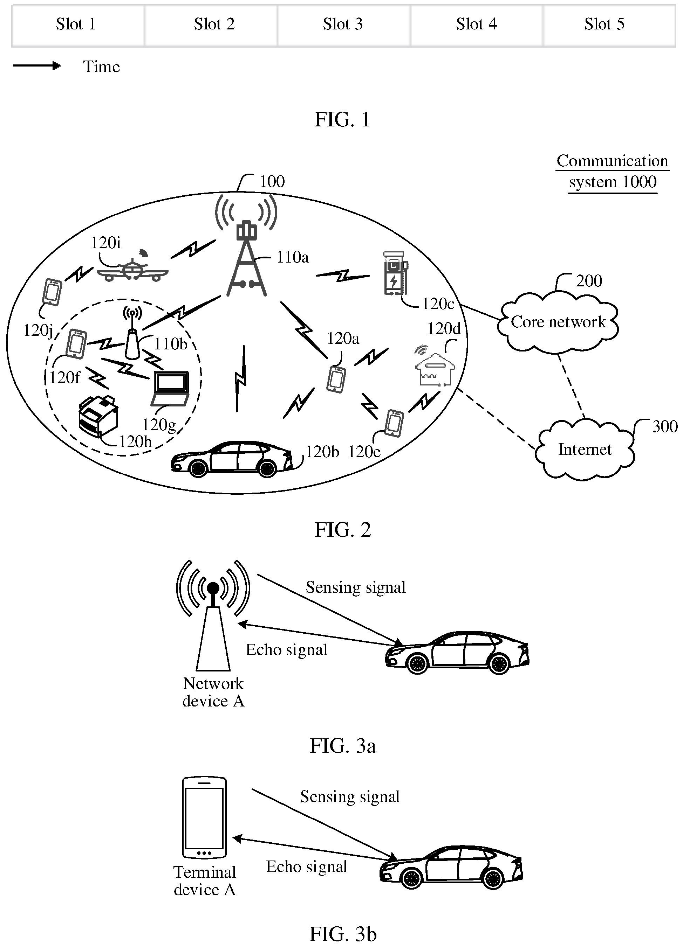

Currently, scheduling is performed per slot in a communication frame structure. As shown in FIG. 1 below, the slot is a continuous period of time. One slot in a 5G NR system includes 14 OFDM symbols, a slot length corresponding to a 15 kHz subcarrier spacing is 1 ms, and a slot length corresponding to a 30 kHz subcarrier spacing is 0.5 ms. Both sending a signal to a terminal by a base station and sending a signal to the base station by the terminal are performed per slot, and an occupied time length is short. Consequently, a velocity-dimensional sensing resolution is low when a communication signal and the sensing signal are multiplexed. Therefore, it is difficult to sense a target with a lower velocity.

### SUMMARY

Embodiments of this application provide a communication method and apparatus, to strike an optimal tradeoff between communication performance and sensing performance.

According to a first aspect, this application provides a communication method. The method may be performed by a first communication apparatus. The first communication apparatus may be, for example, a first network device, or a component in the network device. This is not limited. For example, the method is performed by the first network device. The method includes: The first network device sends first indication information to a terminal device, where the first indication information indicates information about a first time segment, a second time segment, and a third time segment, the first time segment and the second time segment respectively occupy a time segment in the first period, and the third time segment includes at least a part of each second time segment in a plurality of first periods. The first network device sends second indication information to the terminal device, where the second indication information indicates that a first signal occupies the first time segment or the second time segment.

In this embodiment of this application, a frame structure in which communication and sensing are multiplexed includes the plurality of first periods. One first period may include one first time segment and one second time segment. The at least a part of each second time segment in the plurality of first periods is selected to constitute the third time segment. In this way, a signal scheduled in the first time segment occupies only a time segment in one first period, and a signal scheduled in the second time segment may occupy a time segment in the plurality of first periods because the third time segment may be used for indication. In this way, the first network device or a second network device schedules signals in a plurality of second time segments, and more resources can be scheduled at a time, so that scheduling efficiency is improved.

For the frame structure in which communication and sensing are multiplexed, an optimal tradeoff between communication performance and sensing performance can be achieved, and efficiency of scheduling a communication signal or a sensing signal is improved. A target with a higher sensing velocity can be sensed for the sensing signal, thereby improving a sensing capability.

In a possible design, the method further includes: The first network device may determine the first time segment, the second time segment, and the third time segment.

In a possible design, the first period is a specific period or a predefined time unit.

In a possible design, the third time segment includes at least one time unit in each second time segment.

In a possible design, the first time segment and the second time segment respectively occupy consecutive time segments in the first period.

According to the foregoing several possible designs, the first time segment, the second time segment, and the third time segment may be implemented in a plurality of manners. The implementations are flexible, and can be applied to different communication or sensing scenarios.

In a possible design, the first period is a slot, and the first time segment and the second time segment are slot parts.

The frame structure in which communication and sensing are multiplexed includes two slot parts. A signal scheduled in a 1^{st} slot part occupies only a symbol in one slot, and a signal scheduled in a 2^{nd} slot part needs to occupy symbols in a plurality of slots, so that high sensing efficiency is achieved.

In a possible design, when the first period is the specific period, the first indication information indicates an absolute time length included in the first time segment, an absolute time length included in the second time segment, and an absolute time length included in the third time segment; or when the first period is the predefined time unit, the first indication information indicates a quantity of time units included in the first time segment, a quantity of time units included in the second time segment, and a quantity of time units included in the third time segment.

In a possible design, the first indication information further indicates a cycle and an offset of the first period including the second time segment.

In a possible design, the second indication information further indicates a location of a time unit that is in the first time segment and that is occupied by the first signal or a location of a time unit that is in the second time segment and that is occupied by the first signal.

In a possible design, the first indication information is located in broadcast information, system information, or radio resource control RRC layer signaling.

In a possible design, the second indication information is located in downlink control information (Downlink Control Information, DCI).

According to a second aspect, this application provides a communication method. The method may be performed by a first communication apparatus. The first communication apparatus may be, for example, a terminal device, or a component in the terminal device. This is not limited. For example, the method is performed by the terminal device. The method may include: The terminal device receives first indication information sent by a first network device, where the first indication information indicates information about a first time segment, a second time segment, and a third time segment, the first time segment and the second time segment respectively occupy a time segment in the first period, and the third time segment includes at least a part of each second time segment in a plurality of first periods. The terminal device receives second indication information sent by the first network device, where the second indication information indicates that a first signal occupies the first time segment or the second time segment.

In this embodiment of this application, a frame structure in which communication and sensing are multiplexed includes the plurality of first periods. One first period may include one first time segment and one second time segment. The at least a part of each second time segment in the plurality of first periods is selected to constitute the third time segment. In this way, a signal scheduled in the first time segment occupies only a time segment in one first period, and a signal scheduled in the second time segment may occupy a time segment in the plurality of first periods because the third time segment may be used for indication. In this way, the first network device or the terminal device schedules signals in a plurality of second time segments, and more resources can be scheduled at a time, so that scheduling efficiency is improved.

For the frame structure in which communication and sensing are multiplexed, an optimal tradeoff between communication performance and sensing performance can be achieved, and efficiency of scheduling a communication signal or a sensing signal is improved. A target with a higher sensing velocity can be sensed for the sensing signal, thereby improving a sensing capability.

In a possible design, the first period is a specific period or a predefined time unit.

In a possible design, the third time segment includes at least one time unit in each second time segment.

In a possible design, the first time segment and the second time segment respectively occupy consecutive time segments in the first period.

According to the foregoing several possible designs, the first time segment, the second time segment, and the third time segment may be implemented in a plurality of manners. The implementations are flexible, and can be applied to different communication or sensing scenarios.

In a possible design, the first period is a slot, and the first time segment and the second time segment are slot parts.

The frame structure in which communication and sensing are multiplexed includes two slot parts. A signal scheduled in a 1^{st} slot part occupies only a symbol in one slot, and a signal scheduled in a 2^{nd} slot part needs to occupy symbols in a plurality of slots, so that high sensing efficiency is achieved.

In a possible design, when the first period is the specific period, the first indication information indicates an absolute time length included in the first time segment, an absolute time length included in the second time segment, and an absolute time length included in the third time segment; or when the first period is the predefined time unit, the first indication information indicates a quantity of time units included in the first time segment, a quantity of time units included in the second time segment, and a quantity of time units included in the third time segment.

In a possible design, the first indication information further indicates a cycle and an offset of the first period including the second time segment.

In a possible design, the second indication information further indicates a location of a time unit that is in the first time segment and that is occupied by the first signal or a location of a time unit that is in the second time segment and that is occupied by the first signal.

In a possible design, the first indication information is located in broadcast information, system information, or radio resource control RRC layer signaling.

In a possible design, the second indication information is located in downlink control information (Downlink Control Information, DCI).

In a possible design, the first signal may be for communication or sensing.

According to a third aspect, this application provides a communication method. The method may be performed by a second communication apparatus. The second communication apparatus may be, for example, a first network device, or a component in the first network device. This is not limited. For example, the method is performed by a second network device. The method includes: A first network sends first indication information to the second network device, where the first indication information indicates information about a first time segment, a second time segment, and a third time segment, the first time segment and the second time segment respectively occupy a time segment in the first period, and the third time segment includes at least a part of each second time segment in a plurality of first periods. The first network device sends second indication information to the second network device, where the second indication information indicates that a first signal occupies the first time segment or the second time segment.

In this embodiment of this application, a frame structure in which communication and sensing are multiplexed includes the plurality of first periods. One first period may include one first time segment and one second time segment. The at least a part of each second time segment in the plurality of first periods is selected to constitute the third time segment. In this way, a signal scheduled in the first time segment occupies only a time segment in one first period, and a signal scheduled in the second time segment may occupy a time segment in the plurality of first periods because the third time segment may be used for indication. In this way, the first network device or the second network device schedules signals in a plurality of second time segments, and more resources can be scheduled at a time, so that scheduling efficiency is improved.

For the frame structure in which communication and sensing are multiplexed, an optimal tradeoff between communication performance and sensing performance can be achieved, and efficiency of scheduling a communication signal or a sensing signal is improved. A target with a higher sensing velocity can be sensed for the sensing signal, thereby improving a sensing capability.

According to a fourth aspect, this application provides a communication method. The method may be performed by a second communication apparatus. The second communication apparatus may be, for example, a second network device, or a component in the second network device. This is not limited. For example, the method is performed by the second network device. The method includes: The second network device receives first indication information sent by a first network device, where the first indication information indicates information about a first time segment, a second time segment, and a third time segment, the first time segment and the second time segment respectively occupy a time segment in the first period, and the third time segment includes at least a part of each second time segment in a plurality of first periods. The second network device receives second indication information sent by the first network device, where the second indication information indicates that a first signal occupies the first time segment or the second time segment.

In this embodiment of this application, a frame structure in which communication and sensing are multiplexed includes the plurality of first periods. One first period may include one first time segment and one second time segment. The at least a part of each second time segment in the plurality of first periods is selected to constitute the third time segment. In this way, a signal scheduled in the first time segment occupies only a time segment in one first period, and a signal scheduled in the second time segment may occupy a time segment in the plurality of first periods because the third time segment may be used for indication. In this way, the first network device or the second network device schedules signals in a plurality of second time segments, and more resources can be scheduled at a time, so that scheduling efficiency is improved.

For the frame structure in which communication and sensing are multiplexed, an optimal tradeoff between communication performance and sensing performance can be achieved, and efficiency of scheduling a communication signal or a sensing signal is improved. A target with a higher sensing velocity can be sensed for the sensing signal, thereby improving a sensing capability.

According to a fifth aspect, this application further provides a communication method. The method may be performed by a first network device or a second network device. The method includes: sending first indication information, where the first indication information indicates information about a first time segment, a second time segment, and a third time segment, the first time segment and the second time segment respectively occupy a time segment in the first period, and the third time segment includes at least a part of each second time segment in a plurality of first periods; and sending second indication information, where the second indication information indicates that a first signal occupies the first time segment or the second time segment.

According to a sixth aspect, this application further provides a communication method. The method may be performed by a first network device, a second network device, or a terminal device. The method includes: receiving first indication information, where the first indication information indicates information about a first time segment, a second time segment, and a third time segment, the first time segment and the second time segment respectively occupy a time segment in the first period, and the third time segment includes at least a part of each second time segment in a plurality of first periods; and receiving second indication information, where the second indication information indicates that a first signal occupies the first time segment or the second time segment.

Both the third aspect and the fifth aspect include any possible design included in the first aspect, and both the fourth aspect and the sixth aspect include any possible design included in the second aspect. Details are not described herein again.

According to a seventh aspect, this application further provides a communication apparatus. The communication apparatus is configured to perform the method according to any one of the first aspect, the second aspect, and the possible designs thereof. The communication apparatus is, for example, a first communication apparatus, or a functional module in the first communication apparatus, for example, a baseband apparatus or a chip system.

In a possible design, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When implementing the sending function, the transceiver module may be referred to as a sending module (sometimes also referred to as a sending unit). When implementing the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to an eighth aspect, this application further provides a communication apparatus. The communication apparatus is configured to perform the method according to any one of the third aspect, the fourth aspect, and the possible designs thereof. The communication apparatus is, for example, a second communication apparatus, or a functional module in the second communication apparatus, for example, a baseband apparatus or a chip system.

In a possible design manner, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When implementing the sending function, the transceiver module may be referred to as a sending module (sometimes also referred to as a sending unit). When implementing the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a ninth aspect, this application further provides a communication apparatus. The communication apparatus is configured to perform the method according to any one of the fifth aspect, the sixth aspect, and the possible designs thereof. The communication apparatus is, for example, a first communication apparatus or a second communication apparatus, or a functional module in the first communication apparatus or the second communication apparatus, for example, a baseband apparatus or a chip system.

In a possible design, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When implementing the sending function, the transceiver module may be referred to as a sending module (sometimes also referred to as a sending unit). When implementing the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a tenth aspect, this application further provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the first aspect, the second aspect, and the possible designs thereof, performs the method according to any one of the third aspect, the fourth aspect, and the possible designs thereof, or performs the method according to any one of the fifth aspect, the sixth aspect, and the possible designs thereof.

According to an eleventh aspect, this application further provides a communication system. The communication system includes one or more of the following: the communication apparatus according to the seventh aspect, the communication apparatus according to the eighth aspect, or the communication apparatus according to the ninth aspect.

According to a twelfth aspect, this application further provides a computer-readable storage medium. The computer-readable storage medium is for storing a computer program or instructions. When the computer program or the instructions are run, the method according to any one of the first aspect, the second aspect, and the possible designs thereof is caused to be implemented, the method according to any one of the third aspect, the fourth aspect, and the possible designs thereof is caused to be implemented, or the method according to any one of the fifth aspect, the sixth aspect, and the possible designs thereof is caused to be implemented.

According to a thirteenth aspect, this application further provides a computer program product including instructions. When the computer program product runs on a computer, the method according to any one of the first aspect, the second aspect, and the possible designs thereof is caused to be implemented, the method according to any one of the third aspect, the fourth aspect, and the possible designs thereof is caused to be implemented, or the method according to any one of the fifth aspect, the sixth aspect, and the possible designs thereof is caused to be implemented.

According to a fourteenth aspect, this application further provides a chip system, including at least one processor, configured to read and execute program instructions in a memory, so that the chip system implements the method according to any one of the first aspect, the second aspect, and the possible designs thereof, implements the method according to any one of the third aspect, the fourth aspect, and the possible designs thereof, or implements the method according to any one of the fifth aspect, the sixth aspect, and the possible designs thereof. Optionally, the chip system may include a chip, or may include the chip and another discrete device. This is not limited.

According to a fifteenth aspect, this application further provides a circuit. The circuit implements the method according to any one of the first aspect, the second aspect, and the possible designs thereof, implements the method according to any one of the third aspect, the fourth aspect, and the possible designs thereof, or implements the method according to any one of the fifth aspect, the sixth aspect, and the possible designs thereof.

For technical effects that can be achieved in any one of the second aspect to the fifteenth aspect and the possible design manners thereof, refer to the technical effects that can be achieved in any one of the first aspect and the possible designs thereof. Details are not described herein again.

### BRIEF DESCRIPTION OF DRAWINGS

FIG. 1 is a diagram of a configuration of a frame structure;
FIG. 2 is a diagram of a network architecture of a communication system;
FIG. 3a to FIG. 3f are diagrams of sensing scenarios;
FIG. 4 is a schematic flowchart of a communication method according to an embodiment of this application;
FIG. 5 is a schematic flowchart of another communication method according to an embodiment of this application;
FIG. 6 shows another frame structure according to an embodiment of this application;
FIG. 7 shows another frame structure according to an embodiment of this application;
FIG. 8 shows another frame structure according to an embodiment of this application;
FIG. 9 shows another frame structure according to an embodiment of this application;
FIG. 10 shows another frame structure according to an embodiment of this application;
FIG. 11 shows still another frame structure according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

A network architecture and a service scenario that are described in this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more, for example, including at least one of A, B, and C. In this case, A, B, C, A and B, A and C, B and C, or A, B and C may be included. "And/or" describes an association relationship between associated objects and three relationships may specifically exist. For example, A and/or B may represent the following three cases: Only A exists, both A and B exist, and only B exists. In addition, unless otherwise specified, the character "/" generally indicates an "or" relationship between the associated objects.

In addition, the terms "system" and "network" in embodiments of this application may be used interchangeably, and "according to" and "based on" may be used interchangeably.

Ordinal numerals such as "first" and "second" in embodiments of this application are usually for distinguishing between different objects, and are not for limiting a sequence, a time sequence, priorities, importance degrees, or the like of the plurality of objects. For example, a first communication apparatus and a second communication apparatus in embodiments of this application are for distinguishing between the two communication apparatuses, but do not limit priorities, importance degrees, or the like of the two communication apparatuses.

Embodiments of this application are presented around a system including a plurality of devices, components, modules, or the like. It should be understood that the system may include other devices, components, modules, or the like that are not mentioned, or may include only a part of devices, components, modules, or the like that are mentioned in embodiments.

The following first describes a communication system to which embodiments of this application are applicable.

The technical solutions in embodiments of this application may be applied to various communication systems, for example, a universal mobile telecommunications system (universal mobile telecommunications system, UMTS), a wireless local area network (wireless local area network, WLAN), a short-range wireless communication system (for example, a sidelink (sidelink) system, a wireless fidelity (wireless fidelity, Wi-Fi) system, or a Bluetooth system), a wired network, a vehicle to everything (vehicle to everything, V2X) communication system, a device-to-device (device-to-device, D2D) communication system, an internet of vehicles communication system, a 4th generation (4th generation, 4G) mobile communication system (for example, a long term evolution (long term evolution, LTE) system), an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system (for example, a new radio (new radio, NR) system), a future communication system (for example, a 6th generation (6th generation, 6G) mobile communication system), or another similar communication system. This is not limited. In embodiments of this application, a communication system shown in FIG. 2 is used as an example for description. When the technical solutions in embodiments of this application are applied to another communication system, the devices, the components, the modules, or the like in embodiments may be replaced with corresponding devices, components, or modules in the another communication system. This is not limited.

FIG. 2 is a diagram of an architecture of a communication system to which an embodiment of this application is applied. As shown in FIG. 2, the communication system 1000 includes an access network 100 and a core network 200. Optionally, the communication system 1000 may further include an internet 300. The access network 100 may include at least one radio access network (radio access network, RAN) node, for example, 110a and 110b in FIG. 2, and may further include at least one terminal device, for example, 120a to 120j in FIG. 2. 110a is a base station, 110b is a micro base station, 120a, 120e, 120f, and 120j are mobile phones, 120b is an automobile, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, the mobile phones in FIG. 2 include 120a, 120e, 120f, and 120j. The mobile phone 120a may access the base station 110a, be connected to the automobile 120b, directly communicate with the mobile phone 120e, and access the HAP. The automobile 120b may access the HAP, and directly communicate with the mobile phone 120a. The mobile phone 120f may access the micro base station 110b, be connected to the notebook computer 120g, and be connected to the printer 120h. The mobile phone 120j may control the unmanned aerial vehicle 120i.

The network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. Alternatively, the RAN may be an open access network (open RAN, O-RAN or ORAN), a cloud radio access network (cloud radio access network, CRAN), or a communication network of the foregoing two or more networks.

The RAN device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a 6G mobile communication system, a base station in a future mobile communication system, an access node in a Wi-Fi system, or the like.

The RAN device may alternatively be a module or unit that completes some functions of the base station, for example, a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of the software module and the hardware module. The network device may be a macro base station (for example, 110a in FIG. 2), may be a micro base station or an indoor base station (for example, 110b in FIG. 2), or may be a relay node or a donor node. A specific technology and a specific device form that are used for the network device are not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in application scenarios such as a smart grid application scenario, an industrial control application scenario, a smart transportation application scenario, and a smart city application scenario.

The terminal device is a user side device having a wireless transceiver function. The terminal device may also be referred to as a terminal, user equipment (user equipment, UE), a mobile station, a mobile terminal, or the like. The terminal device may be widely used in various scenarios, for example, a device-to-device (device-to-device, D2D) scenario, a vehicle to everything (vehicle to everything, V2X) communication scenario, a machine type communication (machine type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer having the wireless transceiver function, a wearable device, a vehicle, an uncrewed aerial vehicle, a helicopter, an airplane, a ship, a robot, a robotic arm, a smart home device, or the like. In embodiments of this application, an apparatus configured to implement the function of the terminal device may be the terminal device, or may be an apparatus that can support the terminal device in implementing the function, for example, a chip system or a combined device or component that can implement the function of the terminal device. The apparatus may be installed in the terminal device. A specific technology and a specific device form that are used for the terminal device are not limited in embodiments of this application.

In embodiments of this application, the function of the terminal device may alternatively be performed by a module (for example, a chip or a modem) in the terminal device, or may be performed by an apparatus including the function of the terminal device.

The network device and the terminal device may be at fixed locations, or may be movable. The network device and the terminal device may be deployed on land, and includes an indoor or outdoor device or a handheld or vehicle-mounted device; may be deployed on water; or may be deployed on an airplane, a balloon, an artificial satellite in the air. Application scenarios of the network device and the terminal device are not limited in embodiments of this application.

Roles of the network device and the terminal device may be relative. For example, the helicopter or the uncrewed aerial vehicle 120i in FIG. 2 may be configured as a mobile network device. For the terminal device 120j that accesses the radio access network 100 through 120i, the terminal device 120i is a network device. However, for the network device 110a, 120i is a terminal device. That is, 110a and 120i communicate with each other by using a radio air interface protocol. Certainly, 110a and 120i may alternatively communicate with each other by using an interface protocol between network devices. In this case, for 110a, 120i is also a network device. Therefore, both the network device and the terminal device may be collectively referred to as communication apparatuses. 110a and 110b in FIG. 2 may be referred to as communication apparatuses having the function of the network device, and 120a to 120j in FIG. 2 may be referred to as communication apparatuses having the function of the terminal device.

Communication between the network device and the terminal device, between network devices, and between terminal devices may be performed by using a licensed spectrum, may be performed by using an unlicensed spectrum, or may be performed by using both the licensed spectrum and the unlicensed spectrum. This is not limited.

In embodiments of this application, a transmitting end device is a transmitting end of a sensing signal or a communication signal, and a receiving end device is a receiving end of an echo signal of the sensing signal or the communication signal. It may be understood that roles of the transmitting end device and the receiving end device may be interchanged. That is, the transmitting end device also has a receiving capability, and the receiving end device also has a sending capability. For example, the transmitting end device may be the network device in FIG. 2, and the receiving end device may be the terminal device in FIG. 2. Alternatively, the transmitting end device may be the terminal device in FIG. 2, and the receiving end device may be the network device in FIG. 2. Alternatively, the transmitting end device and the receiving end device are the network devices in FIG. 2. Alternatively, the transmitting end device and the receiving end device are the terminal devices in FIG. 2. This is not limited.

The following describes technical features in embodiments of this application.

Sensing technologies may be usually classified into two modes: monostatic sensing and bi-static sensing.

The monostatic sensing mode means that a transmitting end device of a sensing signal and a receiving end device of an echo signal of the sensing signal are a same device. In other words, in the monostatic sensing mode, the transmitting end device needs to send the sensing signal and receive the echo signal that is of the sensing signal and that is reflected from a surface of a target. Therefore, the monostatic sensing mode may also be referred to as a self-sending and self-receiving mode. This is not limited.

The bi-static sensing mode means that a transmitting end device of a sensing signal and a receiving end device of an echo signal of the sensing signal are two different devices. In other words, a sensing station A sends the sensing signal, and the echo signal that is of the sensing signal and that is reflected from a surface of a target is received by a sensing station B. Therefore, the bi-static sensing mode may also be referred to as an A-sending and B-receiving mode.

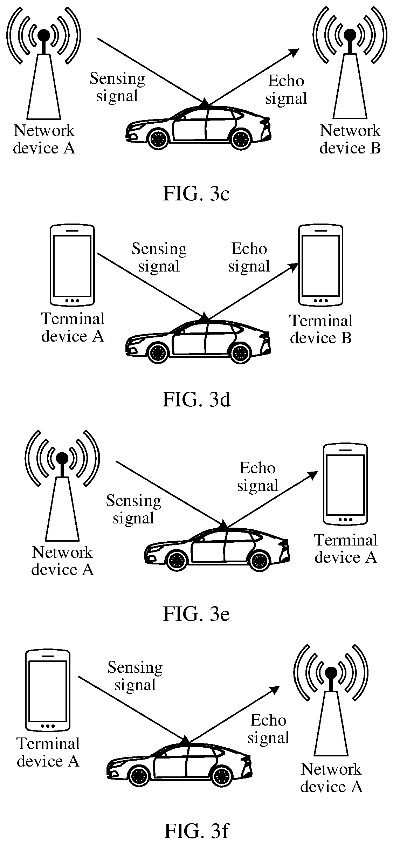

FIG. 3a to FIG. 3f are diagrams of sensing scenarios to which an embodiment of this application is applicable. FIG. 3a to FIG. 3f provide six sensing scenarios, which are respectively a scenario in which a network device A sends a sensing signal, and receives an echo signal, as shown FIG. 3a; a scenario in which a terminal device A sends a sensing signal, and receives an echo signal, as shown in FIG. 3b; a scenario in which a network device A sends a sensing signal, and a network device B receives an echo signal, as shown in FIG. 3c; a scenario in which a terminal device A sends a sensing signal, and a terminal device B receives an echo signal, as shown in FIG. 3d; a scenario in which a network device A sends a sensing signal, and a terminal device A receives an echo signal, as shown in FIG. 3e; and a scenario in which a terminal device A sends a sensing signal, and a network device A receives an echo signal, as shown in FIG. 3f. Embodiments of this application focus on two scenarios: the scenario in which the network device A sends the sensing signal, and the network device B receives the echo signal, and the scenario in which the network device A sends the sensing signal, and the terminal device receives the echo signal.

It should be noted that, in FIG. 3a to FIG. 3f, an example in which a sensing target is a vehicle is used. However, embodiments of this application are not limited thereto. For example, the sensing target may alternatively be a pedestrian, a low-altitude uncrewed aerial vehicle, or another moving or static object. In FIG. 3a to FIG. 3f, an example in which a terminal device is a smartphone is used. Embodiments of this application are not limited thereto.

In a wireless communication system, communication may be classified into different types based on different types of sending nodes and receiving nodes. Generally, sending information to a terminal device by a network device is referred to as downlink communication, and sending information to the network device by the terminal device is referred to as uplink communication. In a long term evolution (Long Term Evolution, LTE)/long term evolution advanced (Long Term Evolution Advanced, LTE-A) communication system and a new radio (New RAT, NR) system, there may be mainly a frequency division duplex (Frequency Division Duplex, FDD) mode and a time division duplex (Time Division Duplex, TDD) mode based on different duplex modes. For a wireless communication system operating in the TDD mode, a downlink carrier and an uplink carrier of the system are carriers on a same carrier frequency. An orthogonal frequency division multiple access (Orthogonal Frequency Division Multiple Access, OFDMA) manner is usually used as a multiple access manner. A main feature of the orthogonal frequency division multiple access manner is as follows: A transmission resource is divided into mutually orthogonal time-frequency resource elements (Resource Elements, REs). Signals sent by a transmitting end are all carried on the REs and transmitted to a receiving end. Because different REs are mutually orthogonal to each other, the receiving end may separately receive a signal sent on each RE.

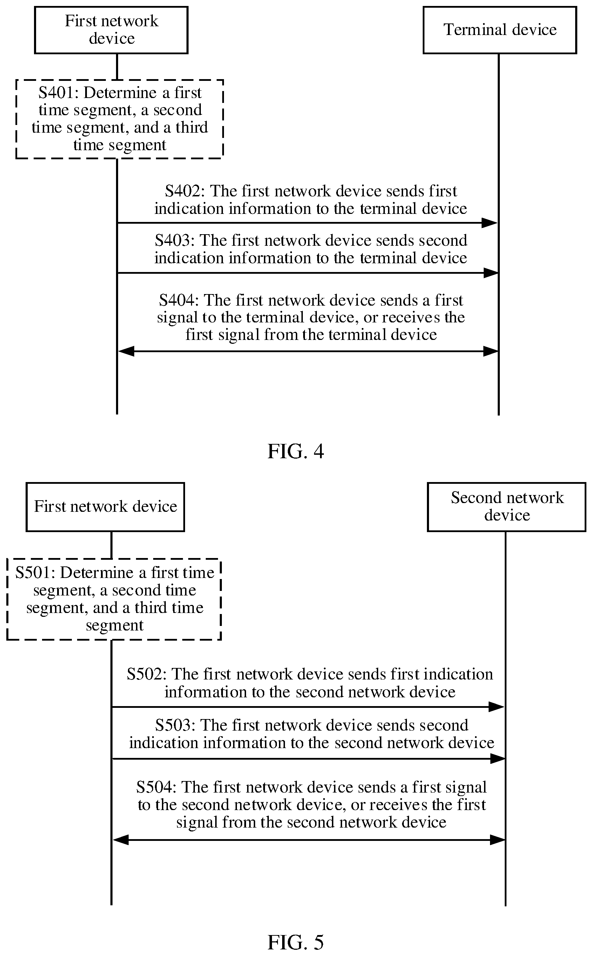

FIG. 4 is a schematic flowchart of a communication method according to an embodiment of this application. As shown in FIG. 4, the method may include the following content.

S401: A first network device may determine a first time segment, a second time segment, and a third time segment, where the first time segment and the second time segment respectively occupy a time segment in a first period, and the third time segment includes at least a part of each second time segment in a plurality of first periods.

Optionally, the first period may be a specific period, for example, 1 ms, 0.5 ms, or 0.25 ms; or may be a predefined time unit. The predefined time unit may be agreed on in a protocol, or may be preconfigured. This is not limited in this application. For example, the predefined time unit is one or more symbols, one or more slots, one or more mini-slots (mini-slots), one or more subframes, or one or more frames. A time domain granularity is not limited in this embodiment of this application. 5G NR is used as an example. One slot includes 14 symbols. Therefore, the first period may be a slot including 14 symbols. In a subsequent standard, a same concept as that in 4G and 5G may continue to be used, or a newly named time unit may be used.

Implementation 1: The first time segment and the second time segment respectively occupy consecutive time segments in the first period. For example, when the first period is 1 ms, the first time segment may be the first 0.5 ms in the 1 ms, and the second time segment may be the last 0.5 ms in the 1 ms. Generally, the first time segment is t ms in the 1 ms, and the second time segment is 1-t ms in the 1 ms. For another example, when the first period includes 14 symbols, the first time segment may occupy the first M symbols in the 14 symbols, and the second time segment occupies the last 14-M symbols in the 14 symbols. Optionally, the first time segment may alternatively be the last M symbols in the first period, and the second time segment is the first 14-M symbols in the first period. This is not limited herein.

Implementation 2: The first time segment and the second time segment respectively occupy inconsecutive time segments in the first period. For example, when the first period is 1 ms, the first time segment may be the first 0.4 ms in the 1 ms, and the second time segment may be the last 0.4 ms in the 1 ms. Generally, the first time segment is t1 ms in the 1 ms, and the second time segment is t2 ms in the 1 ms, where t1+t2<1. For another example, when the first period includes 14 symbols, the first time segment may occupy the first M1 symbols in the 14 symbols, and the second time segment occupies the last M2 symbols in the 14 symbols, where M1+M2<14. Optionally, the first time segment may alternatively be the last M2 symbols in the first period, and the second time segment is the first M1 symbols in the first period, where M1+M2<14. This is not limited herein.

Further, a radio frame may include a plurality of first periods, and each first period may be configured to include both the first time segment and the second time segment. Optionally, some first periods may alternatively be configured to include only the first time segment, and other periods may be configured to include both the first time segment and the second time segment. Generally, a quantity of second time segments included in the plurality of first periods is at least two.

Optionally, when the second time segment is a time unit, the third time segment may include at least one time unit in each second time segment, and each third time segment may include K time units. For example, the time unit may be one or more symbols, or another type of time unit. Considering that the first time segment and the second time segment respectively occupy some symbols in one slot, the first time segment and the second time segment may be referred to as slot parts (Slot Parts, SPs).

A frame structure in which communication and sensing are multiplexed is set to include two slot parts. A signal scheduled in a 1^{st} slot part occupies only a symbol in one slot, and a signal scheduled in a 2^{nd} slot part needs to occupy symbols in a plurality of slots, so that high sensing efficiency is achieved.

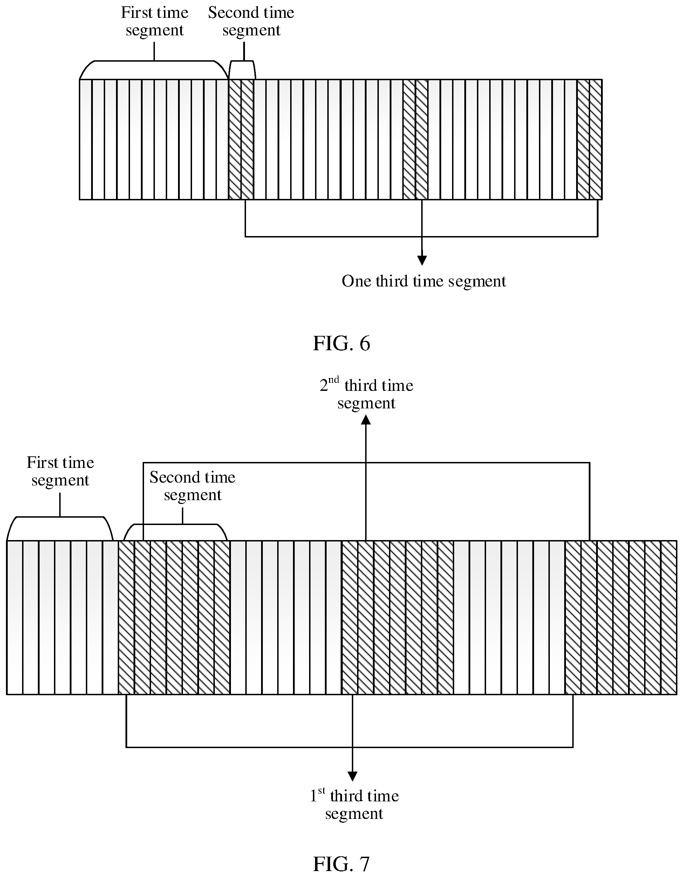

The third time segment includes the at least a part of each second time segment in the plurality of first periods that generally include at least two second time segments. That is, the third time segment includes a part of each of the at least two second time segments. For example, as shown in FIG. 6, three first periods, three first time segments, three second time segments, and two third time segments are included in total, where each first period includes 14 symbols, each first time segment includes 12 symbols, each second time segment includes 2 symbols, and each third time segment includes 3 symbols in the three second time segments.

Implementation 1: The time unit may be one symbol, the first time segment includes some symbols, the second time segment includes some symbols, and the plurality of first periods include M2 second time segments in total. For example, as shown in FIG. 7, when the second time segment includes seven symbols, three second time segments may include seven third time segments, where a 1^{st} third time segment includes a 1^{st} symbol in each of the three second time segments, a 2^{nd} third time segment includes a 2^{nd} symbol in each of the three second time segments, and so on.

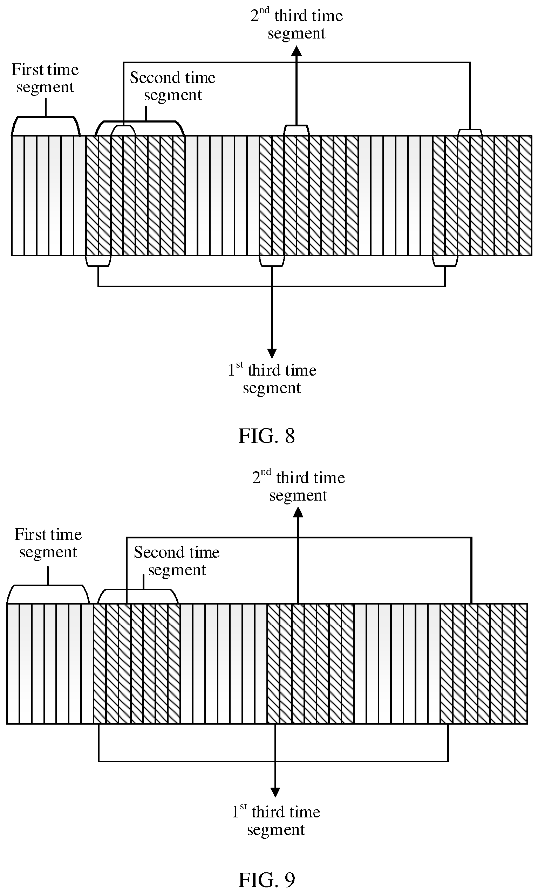

Implementation 2: The time unit may be a plurality of symbols, the first time segment includes some symbols, the second time segment includes some symbols, and the plurality of first periods include three second time segments in total. For example, as shown in FIG. 8, when the second time segment includes eight symbols, the three second time segments may include four third time segments, where a 1^{st} third time segment includes 1^{st} and 2^{nd} symbols in each of the three second time segments, a 2^{nd} third time segment includes 3^{rd} and 4^{th} symbols in each of the three second time segments, and so on.

Implementation 3: When the second time segment is a specific period, the third time segment includes K partial time segments. For example, the specific period of the second time segment may be 0.7s, and may be divided into seven more specific time segments, where each specific time segment is 0.1s. In this case, M2 second time segments may include seven third time segments, where a 1^{st} third time segment includes 1^{st} 0.1s of each of the M2 second time segments, a 2^{nd} third time segment includes 2^{nd} 0.1s of each of the M2 second time segments, and so on.

Implementation 4: Time units or specific time segments extracted (selected) from the second time segment successively may be consecutive, or may be inconsecutive. For example, as shown in FIG. 9, when the second time segment includes seven symbols, three second time segments may include four third time segments, where a 1^{st} third time segment includes a 1^{st} symbol in each of the three second time segments, a 2^{nd} third time segment includes a 3^{rd} symbol in each of the three second time segments, and so on. That is, extraction is performed at odd-numbered symbol locations.

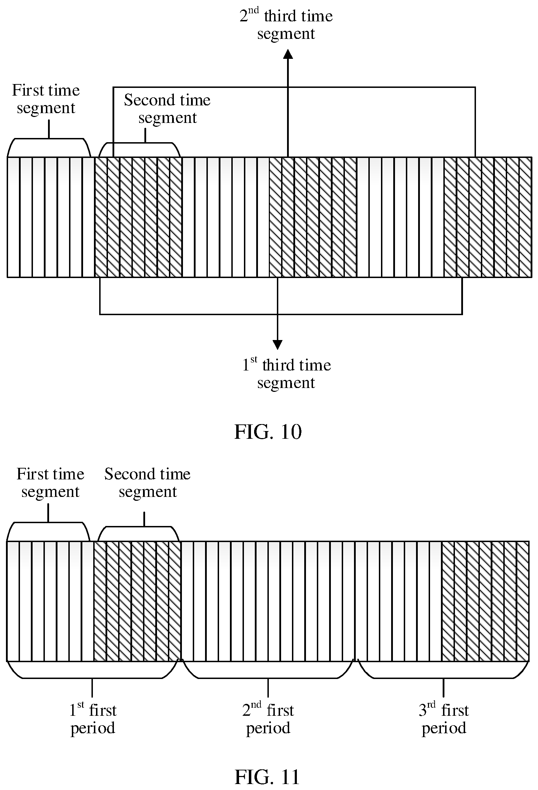

Implementation 5: Locations of time units or specific time segments extracted (selected) from second time segments each time may be corresponding, or may be non-corresponding. For example, as shown in FIG. 10, when the second time segment includes seven symbols, three second time segments may include six third time segments, where a 1^{st} time segment includes 1^{st} symbols in 1^{st} and 2^{nd} second time segments in the three second time segments and a 2^{nd} symbol in a 3^{rd} second time segment, a 2^{nd} time segment includes 2^{nd} symbols in the 1^{st} and 2^{nd} second time segments and a 3^{rd} symbol in the 3^{rd} second time segment, and so on.

Therefore, for a time unit or a specific time segment that is in each second time segment and that is included in the third time segment, there may be a plurality of implementations in terms of a quantity, a location, and a correspondence. This is not limited herein. It can be learned that implementations of the first time segment, the second time segment, and the third time segment are flexible, and can be applicable to different communication or sensing scenarios.

S402: The first network device sends first indication information to a terminal device, where the first indication information indicates information about the first time segment, the second time segment, and the third time segment.

Accordingly, the terminal device receives the first indication information from the first network device.

Optionally, the first indication information indicates a quantity of time units included in the first time segment or an absolute time length included in the first time segment, a quantity of symbols included in the second time segment or an absolute time length included in the second time segment, and a quantity of time units occupied by the third time segment or an absolute time length occupied by the third time segment. Specifically, the first indication information may include three fields. When the first period is the specific period, the first indication information indicates the absolute time length included in the first time segment, the absolute time length included in the second time segment, and the absolute time length included in the third time segment; or when the first period is the predefined time unit, the first indication information indicates the quantity of time units included in the first time segment, a quantity of time units included in the second time segment, and the quantity of time units included in the third time segment. For example, a first field indicates a quantity of symbols in the first time segment, a second field indicates the quantity of symbols in the second time segment, and a third field indicates a quantity of symbols included in the third time segment.

Optionally, the first indication information indicates a quantity of time units included in the first time segment or an absolute time length included in the first time segment, a quantity of symbols included in the second time segment or an absolute time length included in the second time segment, and/or a quantity of time units occupied by the third time segment. Specifically, a rule for selecting a time segment from the second time segment for the third time segment may be predefined. For example, it may be predefined that the third time segment is obtained by extracting (selecting) each time segment in each second time segment one by one. The first indication information may include three fields. When the first period is the specific period, the first indication information indicates the absolute time length included in the first time segment, the absolute time length included in the second time segment, and that the third time segment may be reserved, or may indicate the extraction rule; or when the first period is the predefined time unit, the first indication information indicates the quantity of time units included in the first time segment, a quantity of time units included in the second time segment, and/or the quantity of time units occupied by the third time segment, or may indicate the extraction rule.

Further, the first indication information may indicate a location of the time unit included in the first time segment, a location of the time unit included in the second time segment, and/or a location of the time unit occupied by the third time segment. Specifically, the first indication information may include the three fields. The first field indicates a location of the symbol in the first time segment, the second field indicates a location of the symbol in the second time segment, and the third field indicates a location of the symbol included in the third time segment.

Further, not all first periods include the second time segment. As shown in FIG. 11, a 2^{nd} first period does not include the second time segment. In view of this, the first indication information may further include a field indicating the first period including the second time segment. For example, the first indication information includes a fourth field, and the fourth field indicates a cycle and an offset of the first period including the second time segment, for example, indicates that the cycle of the first period is 2, 4, or another value. It may be understood as that every two or every four first periods includes one first period including the second time segment. When the cycle is 2, the offset may be 0 or 1, where 0 indicates that a first period whose number is an even number includes the second time segment, and 1 indicates that a first period whose number is an odd number includes the second time segment. Certainly, the opposite may also be true.

Optionally, the first indication information may be sent by the base station to the terminal via broadcast information, a system information block (system information block, SIB), or radio resource control RRC layer signaling.

S403: The first network device sends second indication information to the terminal device, where the second indication information indicates that a first signal occupies the first time segment or the second time segment.

Accordingly, the terminal device receives the second indication information from the first network device.

Further, the second indication information indicates that the first network device is to send the first signal to the terminal device, or indicates the terminal device to send the first signal to the first network device.

Specifically, the second indication information includes a fifth field, which may include one bit. A state 0 indicates that the first signal occupies the first time segment, and a state 1 indicates that the first signal occupies the second time segment. Alternatively, a state 1 indicates that the first signal occupies the first time segment, and a state 0 indicates that the first signal occupies the second time segment.

Further, the second indication information further includes a sixth field. When the fifth field indicates that the first signal occupies the first time segment, the sixth field indicates a location of a time unit that is in the first time segment and that is occupied by the first signal; or when the fifth field indicates that the first signal occupies the second time segment, the fifth field indicates a location of a time unit that is included in the third time segment in the second time segment and that is occupied by the first signal.

Still further, when the time unit is a symbol: When the fifth field indicates that the first signal occupies the first time segment, the sixth field indicates a location of a symbol that is in the first time segment and that is occupied by the first signal; or when the fifth field indicates that the first signal occupies the second time segment, the fifth field indicates a location of a symbol that is included in the third time segment in the second time segment and that is occupied by the first signal.

For example, the sixth field may include four bits, and indicate 16 states in total. When the location of the symbol in the first time segment is indicated, there may be 16 states. When the location of the symbol in the second time segment is indicated, there may be less than 16, for example, 12 or eight, states. That is, a quantity of bits of the fifth field depends on a larger quantity of states in the two cases.

**Table 1 Design example of the sixth field**

| Value | Meaning | Value | Meaning |
|---|---|---|---|
| 0000 | Occupy a 1^{st} symbol | 1000 | Occupy a 9^{th} symbol |
| 0001 | Occupy a 2^{nd} symbol | 1001 | Occupy a 10^{th} symbol |
| 0010 | Occupy a 3^{rd} symbol | 1010 | Reserved |
| 0011 | Occupy a 4^{th} symbol | 1011 | Reserved |
| 0100 | Occupy a 5^{th} symbol | 1100 | Reserved |
| 0101 | Occupy a 6^{th} symbol | 1101 | Reserved |
| 0110 | Occupy a 7^{th} symbol | 1110 | Reserved |
| 0111 | Occupy an 8^{th} symbol | 1111 | Reserved |

If the first time segment includes 10 symbols, and the second time segment includes four symbols, the sixth field may include the four bits, and may indicate the 16 states in total. If the location of the symbol that is in the first time segment and that is occupied by the first signal is indicated, a design method is shown in Table 1. If the location of the symbol that is in the second time segment and that is occupied by the first signal is indicated, the sixth field may correspond to the first four states. It should be noted that each state may correspond to a location of a used symbol or locations of some used symbols, and there may be a definition manner other than that in the table. This is not limited herein.

Optionally, the second indication information is carried in downlink control information (Downlink Control Information, DCI), and the information is sent by the network device to the terminal device.

Further, the first signal may be for sensing and/or communication, but is not limited thereto.

S404: The first network device sends the first signal to the terminal device, or the first network device receives the first signal from the terminal device.

The frame structure in which communication and sensing are multiplexed includes the plurality of first periods. One first period may include one first time segment and one second time segment. The at least a part of each second time segment in the plurality of first periods is extracted (selected) to constitute the third time segment. In this way, a signal scheduled in the first time segment occupies only a time segment in one first period, and a signal scheduled in the second time segment may occupy a time segment in the plurality of first periods because the third time segment may be used for indication. In this way, the first network device or a second network device schedules signals in a plurality of second time segments, and more resources can be scheduled at a time, so that scheduling efficiency is improved.

For the frame structure in which communication and sensing are multiplexed, an optimal tradeoff between communication performance and sensing performance can be achieved, and efficiency of scheduling a communication signal or a sensing signal is improved. A target with a higher sensing velocity can be sensed for the sensing signal, thereby improving a sensing capability.

FIG. 5 is a schematic flowchart of another communication method according to an embodiment of this application. As shown in FIG. 5, the method includes the following content.

S501: A first network device may determine a first time segment, a second time segment, and a third time segment.

For a specific implementation process of S501, refer to the related content of S401. Details are not described again.

S502: The first network device sends first indication information to a second network, where the first indication information indicates information about the first time segment, the second time segment, and the third time segment.

Accordingly, the second network device receives the first indication information from the first network device.

For a specific implementation process of S502, refer to the related content of S402. Details are not described again.

S503: The first network device sends second indication information to the second network device, where the second indication information indicates that a first signal occupies the first time segment or the second time segment.

Accordingly, the second network device receives the second indication information from the first network device.

For a specific implementation process of S503, refer to the related content of S403. Details are not described again.

S504: The first network device sends the first signal to the second network device, or the first network device receives the first signal from the second network device.

In embodiments provided in this application, the methods provided in embodiments of this application are separately described from a perspective of the first communication apparatus and a perspective of interaction between the first communication apparatus and the second communication apparatus. Steps performed by the communication apparatus (for example, the first communication apparatus or the second communication apparatus) may be implemented by different function entities included in the terminal device. The communication apparatus (for example, the first communication apparatus or the second communication apparatus) may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

With reference to the accompanying drawings, the following describes communication apparatuses for implementing the foregoing methods in embodiments of this application. Therefore, all the foregoing content may be used in the following embodiments. Repeated content is not described again.

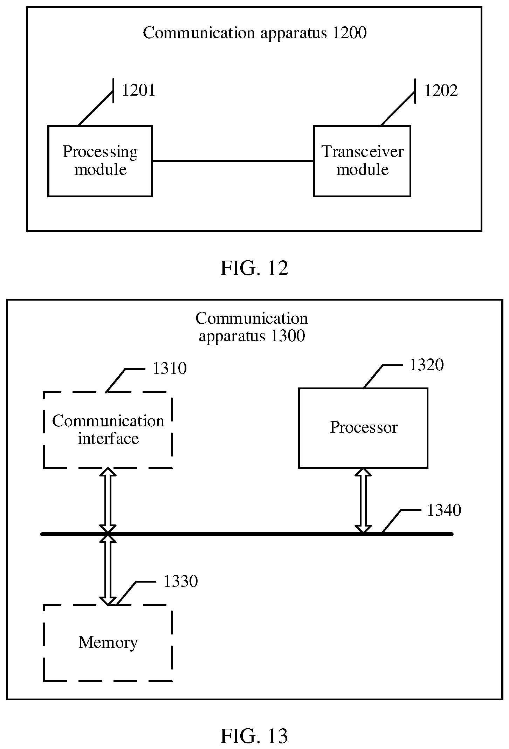

FIG. 12 is an example of a diagram of a structure of a communication apparatus 1200. The communication apparatus 1200 may implement functions or steps implemented by the first communication apparatus or the second communication apparatus in the foregoing method embodiments.

In an implementation, the communication apparatus 1200 may include a processing module 1201 and a transceiver module 1202. The processing module 1201 may be configured to perform data processing, for example, perform steps of the first communication apparatus or the second communication apparatus in any one of the foregoing method embodiments. The transceiver module 1202 may be configured to implement a corresponding communication function, for example, receive or send related data, information, or a message. The transceiver module 1202 may also be referred to as a communication interface, a communication module, a transceiver unit, or the like.

It should be noted that the communication apparatus 1200 may include the processing module 1201, but does not include the transceiver module 1202. Alternatively, the communication apparatus 1200 may include the transceiver module 1202, but does not include the processing module 1201. This may specifically depend on whether the foregoing solutions performed by the communication apparatus 1200 include a processing action and receiving and sending actions.

Optionally, the communication apparatus 1200 may further include a storage module, not shown in FIG. 12. The storage module may be configured to store instructions and/or data, and the processing module 1201 may read the instructions and/or the data in the storage module, to cause the communication apparatus 1200 to implement the foregoing method embodiments.

Optionally, the transceiver module 1202 may include a sending module and a receiving module. The sending module is configured to perform a sending operation in the foregoing method embodiments. The receiving module is configured to perform a receiving operation in the foregoing method embodiments.

It should be noted that the communication apparatus 1200 may include the sending module, but does not include the receiving module. Alternatively, the communication apparatus 1200 may include the receiving module, but does not include the sending module. This may specifically depend on whether the foregoing solutions performed by the communication apparatus 1200 include a sending action and a receiving action.

In an implementation, the communication apparatus 1200 may implement functions or steps implemented by the first communication apparatus in any one of the foregoing method embodiments. The communication apparatus 1200 may be a first communication apparatus or a second communication apparatus, or may be a component configured in the first communication apparatus or the second communication apparatus. The processing module 1201 is configured to perform an operation related to processing on a side of the first communication apparatus or the second communication apparatus in the foregoing method embodiments. The transceiver module 1202 is configured to perform operations related to receiving and sending on the side of the first communication apparatus or the second communication apparatus in the foregoing method embodiments.

Optionally, the communication apparatus 1200 may be configured to perform actions performed by the first communication apparatus or the second communication apparatus in the embodiment shown in any one of FIG. 4 and FIG. 5. For details, refer to the related descriptions in the embodiment shown in any one of FIG. 4 and FIG. 5. Details are not described herein again. For example, the communication apparatus 1200 may perform the following solution:

The transceiver module 1202 may be configured to send or receive first indication information, where the first indication information indicates information about a first time segment, a second time segment, and a third time segment; and may be further configured to send or receive second indication information, where the second indication information indicates that a first signal occupies the first time segment or the second time segment.

In a possible implementation, the transceiver module 1202 may be further configured to send or receive the first signal.

In a possible implementation, the processing module 1201 may be configured to determine the first time segment, the second time segment, and the third time segment.

It should be understood that, for more detailed descriptions of corresponding processes performed by the modules, directly refer to the related descriptions in the method embodiment shown in any one of FIG. 4 and FIG. 5. For brevity, details are not described herein again.

FIG. 13 is a diagram of a structure of a communication apparatus 1300 according to an embodiment of this application. The communication apparatus 1300 may include a processor 1320, configured to implement or support the communication apparatus 1300 in implementing functions of the first communication apparatus or the second communication apparatus in any method embodiment of this application. For details, refer to the detailed descriptions in the foregoing method embodiments. Details are not described herein again. For example, the processor 1320 is configured to: read program instructions through a communication interface, and execute the program instructions, so that the communication apparatus 1300 implements a corresponding method. The processor 1320 may include one or more processors. This is not limited.

Specifically, the communication apparatus 1300 may be a first communication apparatus or a functional module located in the first communication apparatus, and can implement functions of the first communication apparatus in any method embodiment of this application; or the communication apparatus 1300 may be a second communication apparatus or a functional module located in the second communication apparatus, and can implement functions of the second communication apparatus in any method embodiment of this application.

It should be noted that the foregoing functional module may be implemented by hardware, or may be implemented by a combination of the hardware and software. This is not limited.

For example, the communication apparatus 1300 may be a chip system. The chip system may include a chip, or may include the chip and another discrete device. This is not limited.

Optionally, the communication apparatus 1300 may further include a memory 1330, configured to store program instructions and/or data. The memory 1330 is coupled to the processor 1320. Coupling may be understood as indirect coupling or a communication connection between apparatuses, units, or modules, may be in an electrical, mechanical, or another form, and is for information exchange between the apparatuses, the units, or the modules. The processor 1320 may operate in cooperation with the memory 1330. The memory 1330 may include one or more memories. This is not limited.

Further, the processor 1320 is configured to execute the program instructions stored in the memory 1330, so that a communication apparatus 1000 implements the corresponding method.

The one or more memories in the memory 1330 may be included in the processor. Alternatively, the memory 1330 may exist independently, for example, an off-chip memory, and is connected to the processor 1320 through a communication bus (represented by a bold line 1340 in FIG. 13). The memory 1330 and the processor 1320 may alternatively be integrated together.

Optionally, the communication apparatus 1300 further includes the communication interface 1310 (represented by a dashed line in FIG. 13), configured to communicate with another device by using a transmission medium, so that an apparatus in the communication apparatus 1300 may communicate with the another device. For example, when the communication apparatus is the first communication apparatus, the another device may be a second communication apparatus or the like. The processor 1320 may receive and send data through the communication interface 1310.

The communication interface 1310 may be specifically a transceiver. In terms of hardware implementation, the transceiver may be configured to implement the function of the transceiver module 1402, and the transceiver is integrated into the communication apparatus 1300 to constitute the communication interface 1310.

It should be noted that a specific connection medium between the communication interface 1310, the processor 1320, and the memory 1330 is not limited in this embodiment of this application. In FIG. 13, the memory 1330, the processor 1320, and the communication interface 1310 are connected through the communication bus 1340. A manner of connection between other components is merely an example for description, and is not limited thereto. The communication bus 1340 may be classified as an address bus, a data bus, a control bus, or the like. For ease of representation, only one bold line is for representation in FIG. 13, but this does not mean that there is only one communication bus or one type of communication bus.

In this embodiment of this application, the processor 1320 may be a general-purpose processor, a digital signal processor, an application-specific integrated circuit, a field programmable gate array or another programmable logic device, a discrete gate or a transistor logic device, or a discrete hardware component. The general-purpose processor may be a microprocessor, any conventional processor, or the like. The methods disclosed with reference to embodiments of this application may be performed and completed by hardware in the processor, or may be performed and completed by a combination of the hardware in the processor and software.

In embodiments of this application, the memory 1330 may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that is for carrying or storing program code in a form of instructions or a data structure and that can be accessed by a computer, or may be a circuit, or any other apparatus that can implement a storage function, and is configured to store the program instructions and/or the data.

An embodiment of this application further provides a communication system. The communication system may include one or more of the following: a first network device, a second network device, or a terminal device.

For the first network device, the second network device, and the terminal device, refer to the descriptions in the foregoing method embodiments. Details are not described again.

An embodiment of this application further provides a computer-readable storage medium, including program instructions. When the program instructions are run on a computer, the computer is caused to perform methods or steps performed by any communication apparatus (for example, the first communication apparatus or the second communication apparatus) in the foregoing embodiments.

An embodiment of this application further provides a computer program product, including program instructions. When the program instructions are run on a computer, the computer is caused to perform methods or steps performed by any communication apparatus (for example, the first communication apparatus or the second communication apparatus) in the foregoing embodiments.

An embodiment of this application provides a chip system. The chip system includes a processor, configured to implement functions of the first communication apparatus or the second communication apparatus in the foregoing methods (for example, perform a corresponding method or step). The chip system may include a chip, or may include the chip and another discrete device.

Optionally, the chip system further includes a memory. The memory is configured to store program instructions, so that the processor reads and executes the program instructions, to implement the corresponding method.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual coupling, direct coupling, or communication connection may be implemented through some interfaces. The indirect coupling or communication connection between the apparatuses or the units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, in other words, the part that contributes, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
sending first indication information to a terminal device, wherein the first indication information indicates information about a first time segment, a second time segment, and a third time segment, the first time segment and the second time segment respectively occupy a time segment in the first period, and the third time segment comprises at least a part of each second time segment in a plurality of first periods; and
sending second indication information to the terminal device, wherein the second indication information indicates that a first signal occupies the first time segment or the second time segment.

2. A communication method, wherein the method comprises:
sending first indication information to a second network device, wherein the first indication information indicates information about a first time segment, a second time segment, and a third time segment, the first time segment and the second time segment respectively occupy a time segment in the first period, and the third time segment comprises at least a part of each second time segment in a plurality of first periods; and
sending second indication information to the second network device, wherein the second indication information indicates that a first signal occupies the first time segment or the second time segment.

3. A communication method, wherein the method comprises:
receiving first indication information sent by a first network device, wherein the first indication information indicates information about a first time segment, a second time segment, and a third time segment, the first time segment and the second time segment respectively occupy a time segment in the first period, and the third time segment comprises at least a part of each second time segment in a plurality of first periods; and
receiving second indication information sent by the first network device, wherein the second indication information indicates that a first signal occupies the first time segment or the second time segment.

4. The method according to claim 1 or 2, wherein the method further comprises: determining the first time segment, the second time segment, and the third time segment.

5. The method according to any one of claims 1 to 3, wherein the first period is a specific period or a predefined time unit.

6. The method according to any one of claims 1 to 5, wherein the third time segment comprises at least one time unit in each second time segment.

7. The method according to any one of claims 1 to 6, wherein the first time segment and the second time segment respectively occupy consecutive time segments in the first period.

8. The method according to any one of claims 1 to 7, wherein the first period is a slot, and the first time segment and the second time segment are slot parts.

9. The method according to any one of claims 5 to 8, wherein when the first period is the specific period, the first indication information indicates an absolute time length comprised in the first time segment, an absolute time length comprised in the second time segment, and an absolute time length comprised in the third time segment; or
when the first period is the predefined time unit, the first indication information indicates a quantity of time units comprised in the first time segment, a quantity of time units comprised in the second time segment, and a quantity of time units comprised in the third time segment.

10. The method according to any one of claims 1 to 9, wherein the first indication information further indicates a cycle and an offset of the first period comprising the second time segment.

11. The method according to any one of claims 5 to 10, wherein the second indication information further indicates a location of a time unit that is in the first time segment and that is occupied by the first signal or a location of a time unit that is in the second time segment and that is occupied by the first signal.

12. The method according to any one of claims 1 to 11, wherein the first indication information is located in broadcast information, system information, or radio resource control RRC layer signaling.

13. The method according to any one of claims 1 to 12, wherein the second indication information is located in downlink control information (Downlink Control Information, DCI).

14. The method according to any one of claims 1 to 13, wherein the first signal is for communication and/or sensing.

15. A communication apparatus, comprising a transceiver module, wherein the transceiver module is configured to perform the method according to any one of claims 1, 2, and 4 to 14, or the method according to any one of claims 3 and 5 to 14.

16. A communication apparatus, comprising a processor and a memory, wherein
the memory is configured to store one or more computer programs or instructions, and the processor is configured to execute the one or more computer programs or instructions stored in the memory, to cause the communication apparatus to perform the method according to any one of claims 1 to 14.

17. A communication system, comprising a first network device, a second network device, or a terminal device, wherein the first network device is configured to perform the method according to any one of claims 1, 2, and 4 to 14, and the second network device or the terminal device is configured to perform the method according to any one of claims 3 and 5 to 14.

18. A computer-readable storage medium, storing a computer program or instructions, wherein the computer program or the instructions are for implementing the method according to any one of claims 1 to 14.

19. A computer program product, wherein the computer program product comprises a computer program; and when the computer program is run on a computer, the computer is caused to perform the method according to any one of claims 1 to 14.
